# EUROPÄISCHE PATENTSCHRIFT

(11) **EP 1 882 869 B1**
(45) Veröffentlichungstag und Bekanntmachung des Hinweises auf die Patenterteilung: **26.10.2011**
(21) Anmeldenummer: 07012423.5
(22) Anmeldetag: 26.06.2007
(51) Int. Cl.: F16H 61/12, F16H 61/662

(54) **Hydraulisch gesteuertes Kegelscheibenumschlingungsgetriebe**
Hydraulically driven cone pulley belt drive
Transmission à variation continue à poulies et courroie à commande hydraulique

(30) Priorität: 29.07.2006 DE 102006035264
(43) Veröffentlichungstag der Anmeldung: 30.01.2008
(73) Patentinhaber: PIV Drives GmbH, 61352 Bad Homburg (DE)
(72) Erfinder: Wagner, Peter, Dipl.-Ing., 35444 Biebertal (DE)
(74) Vertreter: Lemcke, Brommer & Partner

(56) Entgegenhaltungen:
- EP-A1- 0 881 414
- EP-A2- 1 557 591
- DE-A1-102005 053 699
- DE-U1-202004 013 595

## Beschreibung

Die Erfindung betrifft ein Kegelscheibenumschlingungsgetriebe mit auf An- und Abtriebswellen angeordneten Paaren von Kegelscheiben, von denen die eine fest mit der Welle verbunden ist, sowie je eine auf der Welle axial verschiebbar ist und zwischen denen ein Zugmittelstrang zur Leistungsübertragung umläuft. Die axial verschiebbaren Kegelscheiben bilden zusammen mit wellenfesten Kolben Zylinder-Kolben-Aggregate. Den Zylinder-Kolben-Aggregaten wird von einer Pumpe über ein Steuerventil Druckmittel zur Einstellung und Aufrechterhaltung der Getriebeübersetzung zugeteilt. Der das Steuerventil betätigende Regeldruck wird bedarfsgerecht durch ein Proportional-Druckminderventil (PV) bestimmt, das von einer Steuer- und Rechnereinheit beeinflusst wird, die ihrerseits die erforderlichen Getriebekenndaten über Sensoren erhält und in entsprechende elektrische Signale umsetzt. Der Regeldruck steht dabei in einem Druckraum gegen einen durch Federelemente abgestützten Steuerkolben des Ventils an.

Getriebe dieser Gattung mit hydraulischer Anpassung der Kegelscheiben sind in ihrer grundsätzlichen Funktionsweise beispielsweise bekannt durch die DE-A-12 64 196. Dort erfolgt die Übersetzungseinstellung über mechanische Beeinflussung der Steuerkolbenstellung. Eine Weiterbildung derartiger Getriebe mit hydraulischer Anpressung der Kegelscheiben sowie mit hydraulisch gesteuerter Übersetzurigseinstellung ist dann beispielsweise aus der DE-A-39 14 792 bekannt.

Bei Getrieben der letztgenannten Art kann es zu einem Ausfall des Regeldruckes kommen, der für die Beeinflussung der Stellung des Steuerkolbens notwendig ist und mit dem die Übersetzungseinstellung des Getriebes geregelt wird. Diese Regelung erfolgt dabei nämlich über eine elektronische Rechenund Steuereinheit, die das PV entsprechend beeinflusst. Diese Regelung kann beispielsweise bei einem Stromausfall nicht aufrechterhalten werden, so dass der Steuerkolben sich ungesteuert verschiebt und der Regeldruck wegfällt.

Bei einem solchen Druckausfall wird der Steuerkolben von der ihm zugeordneten Feder in eine Endstellung verschoben, was einem Kommando zu einer plötzlichen Änderung der eingestellten Übersetzung in eine Extremstellung entspricht. Je nach hydraulischer Schaltung der Druckleitungen vom Steuerventil zum An- bzw. Abtriebsscheibensatz entsprechend den jeweiligen Erfordernissen im gewünschten Anwendungsfall, kann dies eine Übersetzungsänderung ins Schnelle oder ins Langsame verursachen.

Eine derartige ungewollte Übersetzungsänderung kann erhebliche Probleme verursachen. Ist z. B. der Antrieb mit einer größeren trägen Masse verbunden, so würde ein Verstellkommando ins Langsame für die Antriebsseite eine möglicherweise starke Beschleunigung der Antriebsmaschine bedeuten. Auf einen Kraftfahrzeugantrieb übertragen heißt das z. B., dass das als träge Masse geltende gesamte Fahrzeug bei einer plötzlichen Übersetzungsänderung ins Langsame (vergleichbar mit einem Stufenschaltgetriebe mit einem plötzlichen Schalten während der schnellen Fahrt in den 1. Gang) den Motor zu hohen oder überhöhten Drehzahlen antreibt. Dies kann nicht nur zu Schäden am Motor sondern auch am gesamten Antriebsstrang führen.

Nur am Rande sei erwähnt, dass ein solcher Fall bei einem Kraftfahrzeug auch verkehrstechnische Folgen haben könnte, wenn das Fahrzeug durch das überraschende Abbremsen außer Kontrolle gerät. Auch könnte es zur Fehlreaktion bei einem Fahrzeugführer kommen, mit entsprechenden Folgen.

Eine Verstellung ins Schnelle hingegen kann zu einer Überlastung an Teilen des Antriebsstranges führen, wenn die Antriebsmaschine z. B. eine im Netz hängende Synchronmaschine ist.

Es sind auch Anwendungsfälle denkbar, die auf der An- und auf der Abtriebsseite große träge Massen aufweisen.

Aufgabe der vorliegenden Erfindung ist es demgemäß, bei einem Störungsfall ein plötzliches Verstellkommando in eine Extremübersetzung, wie sie oben beschrieben wurde, zu verhindern und die eingestellte Übersetzung möglichst beizubehalten, so dass keine Überlastung von Bauteilen und andere der oben geschilderten Nachteile bzw. Gefahrenzustände eintreten können.

Diese Aufgabe wird erfindungsgemäß dadurch gelöst, dass der Steuerkolben mit einer Klemmvorrichtung verbunden ist, die ihn bei einem Druckausfall wie oben beschrieben in seiner zu diesem Zeitpunkt vorliegenden Stellung festklemmt.

In der EP 1 557 591 A2 die den nächsten Stand der Technik darstellt wird zwar bereits beschrieben, einen entsprechenden Steuerkolben bei einem Druckausfall dadurch zu arretieren, dass er bei einem Druckausfall durch eine Feder gegen einen abgeschlossenen Hydraulikraum verspannt wird. Dies hat allerdings den Nachteil, dass aufgrund einer Leckage in diesem Hydraulikraum weiterhin eine unbeabsichtigte Verstellung des Steuerkolbens erfolgen kann. Dies wird durch die hier vorgeschlagene Arretierung des Steuerkolbens mittels einer Klemmvorrichtung wirksamst unterbunden.

Es wird dabei insbesondere vorgeschlagen, die Klemmvorrichtung mechanisch auszugestalten und mit einer Schraubenfeder als Betätigungsmittel zu versehen, die gegen den Druck der Pumpe gespannt ist.

Dies hat einerseits den Vorteil, dass auch bei einem Ausfall des Pumpendruckes die Klemmvorrichtung selbsttätig ausgelöst wird, ohne dass hierzu weitere separate Elemente vorgesehen werden müssen, andererseits ist diese Bauform sehr betriebssicher.

Andererseits ist es auch möglich, als Betätigungsmittel außer einer derartigen mechanischen Schraubenfeder eine pneumatische oder hydraulische Betätigung gung vorzusehen. Weiterhin wird eine Ausführungsform mit Permanentmagneten als Betätigungsmittel vorgeschlagen.

Der gegen das Betätigungsmittel wirkende Druck wird bevorzugt über ein Entlastungsventil abgelassen, das bei einem Fehler oder Druckausfall gegebenenfalls auch gesteuert ausgelost werden kann.

Hierdurch wird eine Erweiterung des Einsatzbereiches des erfindungsgemäßen Gegenstandes ermöglicht, insofern als nicht nur ein Druckausfall durch ein Versagen der Pumpe den Einsatz der Klemmvorrichtung bewirkt sondern ebenfalls ein anderer, eventuell auch elektronisch ermittelter Fehler.

Bei der Erfindung wirkt das Betätigungsmittel auf einen Kolben, über den der Steuerkolben fixiert wird.

Bei der erfindungsgemäßen Ausführungsform ist dieser mit einer konischen Ausnehmung versehen. Diese konische Ausnehmung korrespondiert mit einer radial geschlitzten, im Wesentlichen kegelstumpfartigen Klemmbuchse. Durch eine Betätigung des Kolbens wird die konische Ausnehmung über die Klemmbuchse geschoben und damit die Klemmbuchse radial verformt, was dann zur Klemmung des Steuerkolbens führt. Dies hat sich als eine betriebssichere Ausführungsform erwiesen.

Die Klemmung könnte dabei in Radialrichtung unmittelbar auf den Steuerkolben wirken.

Insbesondere wird aber vorgeschlagen, dass die Klemmbuchse auf eine am Steuerkolben angelenkte Kolbenstange wirkt. Dies hat den Vorteil, dass für die Klemmung ein separates Bauteil vorgesehen ist und die Klemmung somit nicht an empfindlichen Flächen des Steuerkolbens erfolgen muss.

Weitere Vorteile und Merkmale der Erfindung ergeben sich aus der nachfolgenden Beschreibung von Ausführungsbeispielen. Dabei zeigt
- Figur 1: den Hydraulikschaltplan eines hydraulisch angepressten Getriebes mit elektrohydraulischer Steuerung und einer Klemmvorrichtung mit Feder für den Steuerkolben,
- Figur 2: Prinzipskizze einer Klemmvorrichtung mit pneumatischer Betätigung für den Steuerkolben,
- Figur 3: Prinzipskizze einer Klemmvorrichtung mit hydraulischer Betätigung für den Steuerkolben,
- Figur 4: Prinzipskizze einer Klemmvorrichtung mit einer Betätigung für den Steuerkolben über Permanentmagnete.

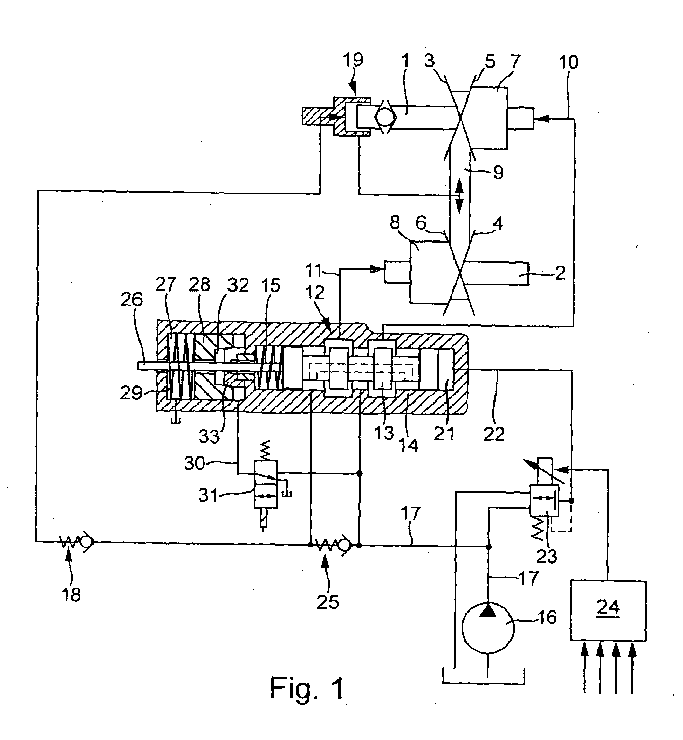

In der Figur 1 erkennt man ein stufenloses Getriebe mit auf zwei parallelen Wellen 1 und 2 angeordneten Scheibensätzen. Diese bestehen jeweils aus einer mit der Welle fest verbundenen Kegelscheibe 3 bzw. 4 und einer mit der Welle drehfest verbunden aber axial verschiebbaren Kegelscheibe 5 bzw. 6. Die verschiebbaren Kegelscheiben 5 und 6 sind über jeweils zugehörige Druckzylinder 7 oder 8 zu betätigen.

Beide Kegelscheibenpaare sind durch ein zwischen ihnen umlaufendes Zugmittel 9 kraftschlüssig miteinander verbunden.

Über Leitungen 10 und 11 wird den Druckzylindern 7 und 8 Druckmittel von einem Steuerventil 12 zugeführt. Dieses Steuerventil ist als so genannter Vierkantensteuerschieber ausgeführt, wobei ein Steuerkolben 13 in einem entsprechenden Gehäuse 14 axial beweglich ist und sich gegen ein Federelement 15 abstützt.

Dieses Steuerventil 12 wird von einer Pumpe 16 über eine Leitung 17 mit Druckmittel versorgt. Zur Aufrechterhaltung eines gewünschten Grunddruckes ist optional ein Vorspannventil 18 vorhanden, das mit einem nachgeschalteten Drehmomentfühler 19 über eine Leitung 20 den Hydraulikabfluss bildet.

Dem Steuerventil 12 wird zu seiner Verstellung über eine Leitung 22 in einen Druckraum 21 bedarfsgerecht Druckmittel mit dem Vorsteuerdruck P_{A} durch das Proportionaldruckminderventil (PV) 23 zugeführt. Damit wird der Steuerkolben 13 in dem Gehäuse 14 axial gegen das Federelement 15 verschoben und so eine Aufrechterhaltung oder Änderung der Getriebeübersetzung gesteuert.

Das Proportionaldruckminderventil 23 erhält das Druckmittel seinerseits von der Pumpe 16 und wird von einer elektrischen bzw. elektronischen Steuer- und Recheneinheit 24 gesteuert. Diese erhält ihre erforderlichen Informationen über nicht dargestellte Sensoren aufgrund derer sie das PV 23 steuert.

Üblicherweise ist im Hydraulikkreislauf noch ein Differenzdruckventil 25 vorgesehen.

Bei einem Stromausfall kann die elektrische bzw. elektronische Steuer- und Recheneinheit 24 nicht mehr arbeiten. Damit fällt auch das PV 23 aufgrund der fehlenden Steuerung durch die Steuer- und Recheneinheit 24 aus, wodurch der Druck P_{A} im Druckraum 21 nicht mehr geregelt wird. Hierdurch wird der Steuerkolben 13 ungeregelt verschoben, was dazu führen kann, dass das Getriebe unkontrolliert ins Schnelle oder ins Langsame verstellt.

Um dies zu verhindern, ist bei dem hier dargestellten Ausführungsbeispiel an dem Steuerkolben 13 eine dünne Kolbenstange 26 fixiert. Diese läuft in einen Druckraum 27, den sie in Axialrichtung durchquert.

In diesem Druckraum befindet sich eine Klemmvorrichtung, die einen im Druckraum 27 axial parallel zur Kolbenstange 26 verschieblichen Kolben 28 aufweist. Dieser Kolben wird einseitig in einem drucklos gehaltenen Abschnitt des Druckraumes 27 durch eine Schraubenfeder 29 beaufschlagt und auf seiner gegenüberliegenden Seite üblicherweise mit dem durch die Pumpe 16 gelieferten Pumpendruck des Systems. Dieser wird über eine Leitung 30 zugeführt und fixiert den Kolben 28 gegen die Kraft der Feder 29.

Bei Auftreten einer Betriebsstörung wird durch ein in dieser Leitung befindliches Ventil 31 die Leitung 30 schlagartig drucklos gemacht, so dass die Feder 29 den Kolben 28 axial verschieben kann, in der dargestellten Zeichnung nach rechts.

Auf seiner der Feder 29 abgewandten Seite weist der Kolben 28 dabei eine achsparallel ausgerichtete konische Ausnehmung 32 auf, die mit einer ebenfalls achsparallel kegelstumpfartigen in Axialrichtung radial geschlitzten Klemmbuchse 33 korrespondiert. Diese Klemmbuchse wird dabei durch die Kolbenstange 26 in Axialrichtung durchquert.

Bei der beschriebenen axialen Verschiebung des Kolbens 28 wird seine konische Ausnehmung 32 über die Klemmbuchse 33 geschoben und verformt diese in Radialrichtung nach innen, so dass damit die Kolbenstange 26 durch die Klemmbuchse 33 arretiert wird. Damit wird wiederum der Kolben 13 in seiner Position fixiert, der an die Kolbenstange angekoppelt ist und eine ungewollte Verstellung der Getriebeeinstellung wird verhindert.

Auf diese Art und Weise wird eine mechanische, betriebssicher fungierende Möglichkeit gegeben, für ein verstellbares Kegelscheibengetriebe einen Notbetrieb vorzusehen.

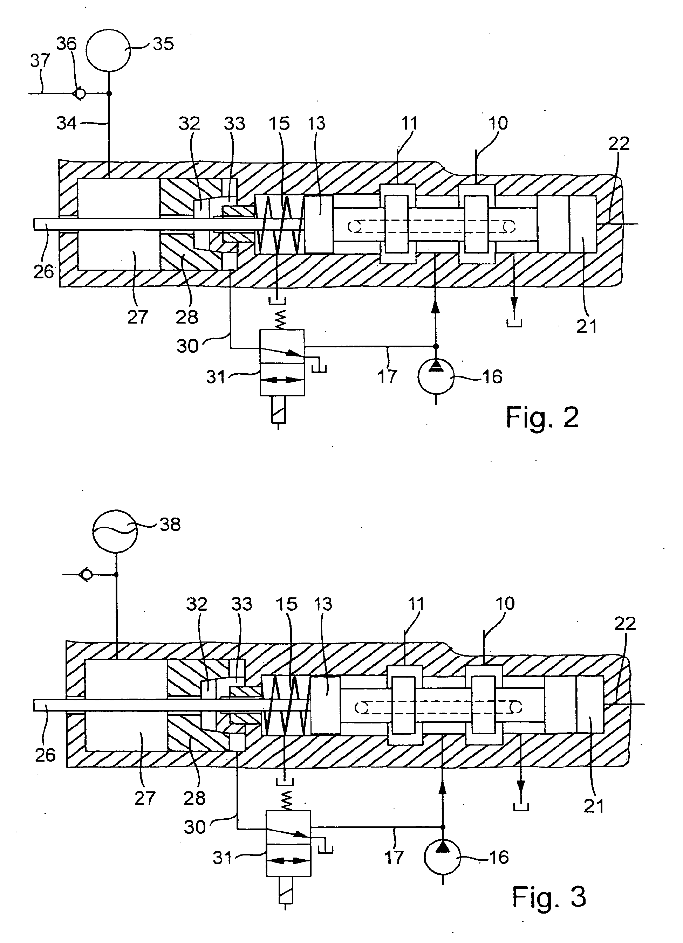

In den Figuren 2 bis 4 sind weitere Ausführungsformen beschrieben, bei denen gleiche Elemente mit denselben Bezugszeichen versehen sind.

Unterschiedlich sind in den weiteren dargestellten Ausführungsbeispielen die selbsttätigen Betätigungsmittel für die Klemmvorrichtung.

Dabei ist in der Figur 2 eine pneumatische Betätigung vorgesehen: Der Druckraum 27, der durch den Kolben 28 abgeschlossen ist, wird hierbei mit Druckluft beaufschlagt, die über eine Leitung 34 zugeführt wird, die mit einem Druckluftspeicher 35 in Verbindung steht. Über die genannte Leitung 34 wird über eine mit Rückschlagventil 36 versehene Befüllleitung 37 im Druckraum 27 ein entsprechender Druck pneumatisch aufgebaut. Bei Druckloswerden der Leitung 30 wird der Kolben 28 dann durch den erzeugten pneumatischen Druck wie oben beschrieben mit seiner konischen Ausnehmung 32 über die Klemmbuchse 33 gedrückt und legt damit die dünne Kolbenstange 26 in ihrer axialen Position fest, womit auch der Kolben 13 des Vierkantsteuerschiebers 12 fixiert wird.

Anstelle einer pneumatischen Betätigung mittels Druckluftspeicher kann auch ein hydraulisches Betätigungsmittel für die Klemmvorrichtung vorgesehen werden. Hierzu ist dann der Druckraum 27 mit einem Hydraulikspeicher 38 verbunden. Bei dieser Ausführungsform wird dann der Kolben 28, der den Druckraum 27 abschließt, bei Druckloswerden der Leitung 30 durch die entsprechende Hydraulikflüssigkeit nach rechts verschoben und klemmt dann, wie beschrieben, die dünne Kolbenstange 26 fest, um damit den Kolben 13 des Vierkantsteuerschiebers wie gehabt zu fixieren.

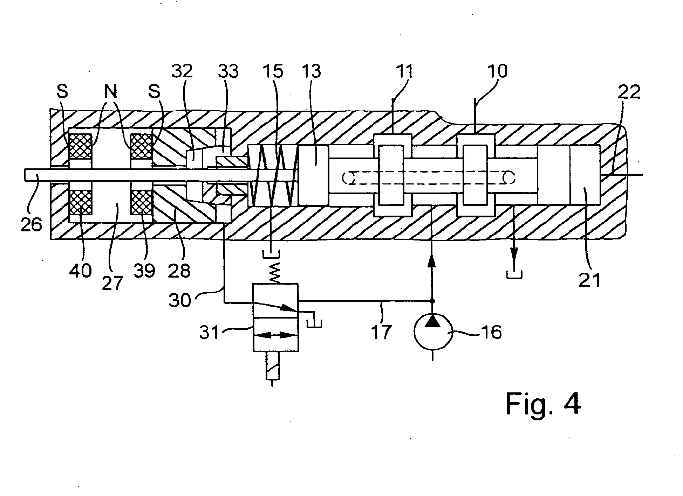

Um den für die pneumatische oder hydraulische Betätigung des Kolbens 28 notwendigen Bauaufwand zu umgehen, wird in der Figur 4 noch eine weitere Variante vorgeschlagen, bei der im Druckraum 27 achsparallel zur dünnen Kolbenstange 26 sich Permanentmagnete 39 gegenüberliegen, die einander entgegengesetzt gepolt sind und sich somit abstoßen.

Damit wird bewirkt, dass beim Druckloswerden der Leitung 30 der Kolben 28 durch den an ihm befestigten Permanentmagnet 39 von dem entgegengesetzt gepolten Permanentmagneten 40, der in dem Druckraum 27 vorhanden ist, mit seiner konischen Ausnehmung 32 auf die Klemmbuchse 33 getrieben wird und somit die gewünschte Klemmwirkung wie oben bereits mehrmals beschrieben bewirkt.

Mit all diesen Varianten wird jeweils eine effektive Möglichkeit offenbart, die gewünschte Fixierung des in einem CVT-Getriebes vorhandenen Steuerkolbens zu erreichen und somit ein Mittel an die Hand zu geben, das verhindert, dass ein stufenlos einstellbares Kegelscheibengetriebe in Extremsituationen eine unerwünschten Verstellbewegungen durchführt.

## Patentansprüche

1. Stufenlos einstellbares Kegelscheibengetriebe mit auf An- (1) und Abtrlebswelle (2) drehfest angeordneten Paaren von Kegelscheiben, von denen je eine (3, 4) fest mit der Welle (1, 2) verbunden ist sowie je eine (5, 6) axial verschiebbar ist, und zwischen denen ein Zugmittelstrang (9) zur Leistungsübertragung umläuft, wobei die axial verschiebbaren Kegelscheiben (5, 6) zusammen mit jeweils wellenfesten Kolben je ein Zylinder-Kolben-Aggregat (7, 8) bilden, denen zur Einstellung und Aufrechterhaltung der Getriebeübersetzung von einer Pumpe (16) Druckmittel über ein Steuerventil (12) zugeführt wird, das als Vierkantensteuerschieber ausgebildet ist, wobei ein Steuerkolben (13) mit von einem Proportionaldruckminderventil (23) gelieferten Druckflüssigkeit beaufschlagt und gegen ein Federelement (15) abgestützt ist,
wobei
der Steuerkolben (13) mit einer Klemmvorrichtung (28133) verbunden ist, die ihn bei einem Druckausfall in seiner zu diesem Zeitpunkt vorliegenden Stellung festklemmt
**dadurch gekennzeichnet,**
**dass** ein Betätigungsmittel (29) der Klemmvorrichtung auf einen Kolben (28) mit konischer Ausnehmung (32) wirkt, der mit einer geschlitzten, im wesentlichen kegelstumpfartigen Klemmbuchse (33) korrespondiert, die durch den Kolben (28) radial verformt wird zur Klemmung des Steuerkolbens (13).

2. Kegelscheibengetriebe nach Anspruch 1,
**dadurch gekennzeichnet,**
**dass** die Klemmvorrichtung (28/33) ein mechanisches Betätigungsmittel aufweist.

3. Kegelscheibengetriebe nach Anspruch 1,
**dadurch gekennzeichnet,**
**dass** die Klemmvorrichtung (28/33) ein pneumatisch Betätigungsmittel aufweist.

4. Kegelscheibengetriebe nach Anspruch 1,
**dadurch gekennzeichnet,**
**dass** die Klemmvorrichtung (28/33) ein hydraulisches Betätigungsmittel aufweist.

5. Kegeischeibengetriebe nach Anspruch 2,
**dadurch gekennzeichnet,**
**dass** die Klemmvorrichtung eine Feder (29) als Betätigungsmittel aufweist, die gegen den Druck der Pumpe (16) gespannt ist.

6. Kegelscheibengetriebe gemäß einem der Ansprüche 2 bis 4,
**dadurch gekennzeichnet,**
**dass** der gegen das Betätigungsmittel (29) wirkende Druck über ein Entlastungsventil (31), das bei Fehler oder Druckausfall auslöst, abgelassen wird.

7. Kegelscheibengetriebe gemäß Anspruch 1.
**dadurch gekennzeichnet,**
**dass** ein Klemmmittel unmittelbar auf den Steuerkolben (13) wirkt.

8. Kegelscheibengetriebe gemaß Anspruch 1,
**dadurch gekennzeichnet,**
**dass** die Klemmbuchse (33) auf eine am Steuerkolben (13) angelenkte Kolbenstange (26) wirkt.

## Claims

1. Infinitely variable cone pulley gear having pairs of cone pulleys arranged on a drive shaft (1) and a driven shaft (2) so as to rotate therewith, one of which (3, 4) is rigidly connected to the shaft (1, 2) and one of which (5, 6) is axially displaceable, and having a traction cable (9) circulating between the pairs of cone pulleys for transmitting the power, the axially displaceable cone pulleys (5, 6) each forming together with a piston, which is fixed to the shaft, a cylinder-piston assembly (7, 8) which, for the purpose of adjusting and maintaining the gear transmission, is supplied with pressure medium by a pump (16) *via* a control valve (12) constructed in the form of a square distributing slide valve, a control piston (13) being acted upon by pressure fluid delivered by a proportional pressure-reducing valve (23) and being supported against a spring element (15), the control piston (13) being associated with a clamping device (28/33) which, in the event of a loss of pressure, clamps the control piston in the position in which it is located at the time,
**characterised in that**
an actuating means (29) of the clamping device acts on a piston (28) having a conical recess (32) which is counterpart to a slotted, substantially truncated-cone-shaped clamping bush (33) which is deformed radially by the piston (28) to clamp the control piston (13).

2. Cone pulley gear according to claim 1,
**characterised in that**
the clamping device (28/33) has a mechanical actuating means.

3. Cone pulley gear according to claim 1,
**characterised in that**
the clamping device (28/33) has a pneumatic actuating means.

4. Cone pulley gear according to claim 1,
**characterised in that**
the clamping device (28/33) has a hydraulic actuating means.

5. Cone pulley gear according to claim 2,
**characterised in that**
the clamping device has a spring (29) as actuating means, which is biased against the pressure of the pump (16).

6. Cone pulley gear according to any one of claims 2 to 4, **characterised in that**
the pressure acting against the actuating means (29) is discharged by way of a relief valve (31) which is triggered in the event of faults or loss of pressure.

7. Cone pulley gear according to claim 1,
**characterised in that**
a clamping means acts directly on the control piston (13).

8. Cone pulley gear according to claim 1,
**characterised in that**
the clamping bush (33) acts on a piston rod (26) coupled to the control piston (13).

## Revendications

1. Transmission à poulies coniques à variation continue, avec des paires de poulies coniques disposées en solidarité de rotation sur un arbre menant (1) et un arbre mené (2), parmi lesquelles une poulie respective (3, 4) est fixement assemblée à l'arbre (1, 2) et une poulie respective (5, 6) est axialement mobile, et entre lesquelles circule un brin de moyen de traction (9) pour la transmission de puissance, sachant que les poulies coniques axialement mobiles (5, 6) forment conjointement avec des pistons respectifs solidaires des arbres un ensemble cylindre-piston respectif (7, 8), ensembles auxquels un fluide hydraulique est apporté par une pompe (16) pour régler et maintenir la démultiplication de la transmission, par l'intermédiaire d'un distributeur de commande (12) qui est réalisé sous forme de tiroir de commande carré, sachant qu'un piston de commande (13) est alimenté en liquide sous pression fourni par un détendeur proportionnel (23) et est soutenu contre un élément de ressort (15),
sachant que le piston de commande (13) est relié à un dispositif de serrage (28/33) qui, en cas de manque de pression, le bloque par serrage dans la position qu'il occupe à cet instant,
**caractérisée en ce qu'**un moyen d'actionnement (29) du dispositif de serrage agit sur un piston (28) doté d'un évidement conique (32) qui est en correspondance avec une douille de serrage fendue (33) essentiellement tronconique qui est déformée radialement par le piston (28) pour serrer le piston de commande (13).

2. Transmission à poulies coniques selon la revendication 1, **caractérisée en ce que** le dispositif de serrage (28/33) présente un moyen d'actionnement mécanique.

3. Transmission à poulies coniques selon la revendication 1, **caractérisée en ce que** le dispositif de serrage (28/33) présente un moyen d'actionnement pneumatique.

4. Transmission à poulies coniques selon la revendication 1, **caractérisée en ce que** le dispositif de serrage (28/33) présente un moyen d'actionnement hydraulique.

5. Transmission à poulies coniques selon la revendication 2, **caractérisée en ce que** le dispositif de serrage présente comme moyen d'actionnement un ressort (29) qui est tendu à l'encontre de la pression de la pompe (16).

6. Transmission à poulies coniques selon l'une des revendications 2 à 4, **caractérisée en ce que** la pression agissant à l'encontre du moyen d'actionnement (29) est évacuée par l'intermédiaire d'une soupape de décharge (31) qui se déclenche en cas de défaut ou de manque de pression.

7. Transmission à poulies coniques selon la revendication 1, **caractérisée en ce qu'**un moyen de serrage agit indirectement sur le piston de commande (13).

8. Transmission à poulies coniques selon la revendication 1, **caractérisée en ce que** la douille de serrage (33) agit sur une tige de piston (26) articulée sur le piston de commande (13).
